# EUROPEAN PATENT APPLICATION

(11) **EP 2 940 995 A1**
(43) Date of publication of application: **04.11.2015**
(21) Application number: 15165400.1
(22) Date of filing: 28.04.2015
(51) Int. Cl.: H04N 13/00, G06F 3/14, G02B 27/22, G03B 37/04, H04N 9/31, H04N 13/02, H04N 13/04

(54) **VIRTUAL VITRINE**

(30) Priority: 29.04.2014 FI 20145396
(71) Applicant: Satavision OY, 90240 Oulu (FI)
(72) Inventor: Sorvisto, Mika, 90240 Oulu (FI); Kangas, Seppo, 90240 Oulu (FI)
(74) Representative: Berggren Oy Ab

(57) **Abstract**

Virtual showcase (1) according to the present invention comprises a base part (11) of the virtual showcase, a three-dimensional presentation part (12), the wall elements of which are translucent, a light-impermeable roof (13) of the presentation part, and means for projecting an image of the object (3) under review onto the inner surfaces of the wall elements of the presentation part (12). The processing means of the virtual showcase comprises both optical location finder means (15) and programmable means for defining the location of the viewer (2) of the object (3) under review in relation to the virtual showcase. The processing means of the virtual showcase further comprise programmable means and optical means for projecting the image/images of the object (3) under review onto the inner surface of the wall elements of the virtual showcase (1) on the basis of the definition of the viewer's (2) location and/or position.

## Description

The invention relates to a virtual showcase, onto the faces of which images of the object under review are projected from the inside of the virtual showcase, determined by the location and position of the viewer of the object.

### State of the art

Different types of graphic marketing materials are utilized in advertising. In addition to distributed brochures, different graphic, at least semi-fixed marketing tools are used. These include, for example, walls of the marketing space in shop premises, trade fairs, exhibitions, events or promotional functions. Graphic marketing arguments depicting the product or service are printed on the walls. Semi-fixed wall solutions are time-consuming both during their assembly and disassembly of these.

Also so-called roll-up stands are used as dismountable advertising means, which can be set up and taken down in a few minutes.

It is common to use various digital images, variable electronic material and videos as marketing means. Digital variable subject matter can be presented, for example, by using a laptop, tablet or a separate TV screen. It is not always possible to place these presentation tools in an optimal manner and their size is not sufficient to provide an adequate view of the object in the right or almost right size.

Also various two-dimensional display systems based on touch screens are known, in which the viewer can by their own actions edit the size and position of the object under review on the display device. These solutions require the utilisation of the touch screen technology, which increases the price of the display system.

There are also 3D-based display arrangements. For example, the published application US 2006/0125822 states a hemispherical display arrangement, the size of the holographic image inside of which can be altered by the viewer's manual control. In the hemispherical display dome used in the depicted display arrangement there are areas, in which the size of the object under review can be altered by a touch of hand inside the hemispherical display dome.

In the illustrated solution the alteration of the size of the object in the display device always requires actions by the user. The user must know the possible control actions in order to make the visible image of the object correspond to wishes. Also such solutions are known, in which display elements containing visual features have also been used as additional elements in connection with the actual objects under review. For example, the published application US 2012/20200600 presents a solution, in which there is a display element between the real-world object under review and the viewer, the display element covering at least part of the real-world object under review. The depicted solution specifies the interrelationships of the viewer and the display element. Information relating to the object under review can then be shown on the display element and/or such specific features can be added to the object that the object under review does not have at that particular moment. With such an arrangement it is possible to present the object viewed by the viewer in such a manner that parts of the real object are seen on one or both sides of the display element, but a part of the object supplemented with virtual features of the display element are seen at the location of the display element. Thus the general view shown to the viewer includes both features of the real object and virtual features and elements of the object presented on the display element.

As the solution makes use of both the real object and the virtual object on the display device, the size of the virtual object shown on the display device is constant.

From the published application WO 2011127578 there is known a display arrangement, in which the image of the presented object is rendered onto a surface in front of the viewer from above the surface onto a planar surface. In order to generate a 3D effect, the surface has to be tilted on the basis of the viewer's position. The generated 3D image can only be seen in the point, which is either a predetermined point or in which the viewer has been defined to be.

From the published application EP 0607000 there is known a display arrangement, in which the image of the object is rendered by means of a mirror to the direction, in which the viewer has been established to be on the basis of measurements. In order for the rendered image to be perceived three-dimensional, the viewer has to have special stereo viewing glasses which are controlled open and shut by ultrasound from the central unit of the means so that the left and right eye receive an image taken at different angles. Thus the viewer with stereo viewing glasses is generated an impression of a three-dimensional subject.

The published application WO 0215110 presents a display arrangement, in which a 3D impression of the object is generated to the viewer by means of an inclined semi-translucent mirror. The viewer has to have appropriate stereo viewing glasses for the 3D image to be perceived.

### Object of the invention

The object of the invention is to introduce a new display device arrangement, a virtual showcase, in which it is possible to render images of the object under review from different sides of the object. The viewer is generated an impression of a three-dimensional object in the virtual showcase by the images of the virtual showcase.

The objects of the invention are achieved with a device arrangement, in which graphic information on the object under review is imaged in the virtual showcase so that the images depicting the different sides of the object are projected in the virtual showcase in a manner determined by the viewer's place and position.

It is an advantage of the virtual showcase of the invention that the object's viewer is provided with a three-dimensional impression of the object under review without having to use 3D viewing glasses.

It is a further advantage of the invention that the viewer can examine details of the object more closely also from the inside of the object by changing the viewing place closer to the virtual showcase.

It is also an advantage of the invention that a stereoscopic display can be utilised when presenting the object so that the three-dimensional view of the object can be emphasized.

It is characteristic of the virtual showcase of the invention comprising a base part of the virtual showcase, a three-dimensional presentation part, the wall elements of the presentation part being translucent, a light-impermeable roof of the presentation part and optical means for projecting the object under review from the base part to the inner surface of the wall elements of the presentation part that it further comprises
- means for determining the location of the viewer of the object under review in relation to the virtual showcase;
- means for determining the position of the viewer of the object under review in relation to the virtual showcase; and
- means for projecting the image/images of the object under review to the inner surface of the wall elements of the virtual showcase at least on the basis of the determination of the viewer's position.

Some advantageous embodiments of the invention are shown in the dependent claims.

The basic idea of the invention is the following: A virtual showcase of the invention comprises advantageously a base part of the virtual showcase, a three-dimensional presentation part on top of the base part of the virtual showcase, the wall elements of the presentation part being translucent, a light-impermeable roof of the presentation part and processing means for generating an image/images of the object under review and projecting them to the inner surface of the wall elements of the presentation part.

Another virtual showcase of the invention comprises advantageously a base part of the virtual showcase and a 3D display surface on top of the base part, the 3D display surface being configured to render above it a 3D image of the object, depending on the place of the viewer. Also this advantageous embodiment comprises processing means for generating 3D image/images of the imaged object under review.

In both embodiments the processing means of the virtual showcase is advantageously located in the base part of the virtual showcase. The processing means comprises both optical projection means and programmable means for determining the place of the viewer of the object under review in relation to the virtual showcase. The viewer's location can advantageously be determined on at least two areas surrounding the virtual showcase.

The processing means of the virtual showcase further comprises both optical means and programmable means for determining the position of the viewer of the object under review in relation to the virtual showcase.

The processing means of the virtual showcase further comprises both programmable means and optical projecting means for projecting the image/images of the object under review either onto the inner surface of the wall elements of the virtual showcase or for rendering an image above the 3D display surface on the basis of the determination of the viewer's place and position.

The invention is next explained in detail. The explanation refers to the following drawings, in which
Figure 1 illustrates by way of example a virtual showcase of the invention;
Figure 2a illustrates by way of example an object under review in a virtual showcase according to a first embodiment of the invention;
Figure 2b illustrates by way of example an object under review in a virtual showcase according to a second embodiment of the invention;
Figure 3 illustrates by way of example a flowchart of a projection method of images of the object used in a virtual showcase of the invention.

The embodiments in the following specification are only exemplary, and one skilled in the art can execute the basic idea of the invention also in some other way than the one depicted in the specification. Although an embodiment or embodiments may be referred to in several places in the specification, this does not mean that the reference would only be directed to one depicted embodiment or that the depicted feature would only be applicable in the one depicted embodiment. Individual features of two or more embodiments may be combined and in this way generate new embodiments of the invention.

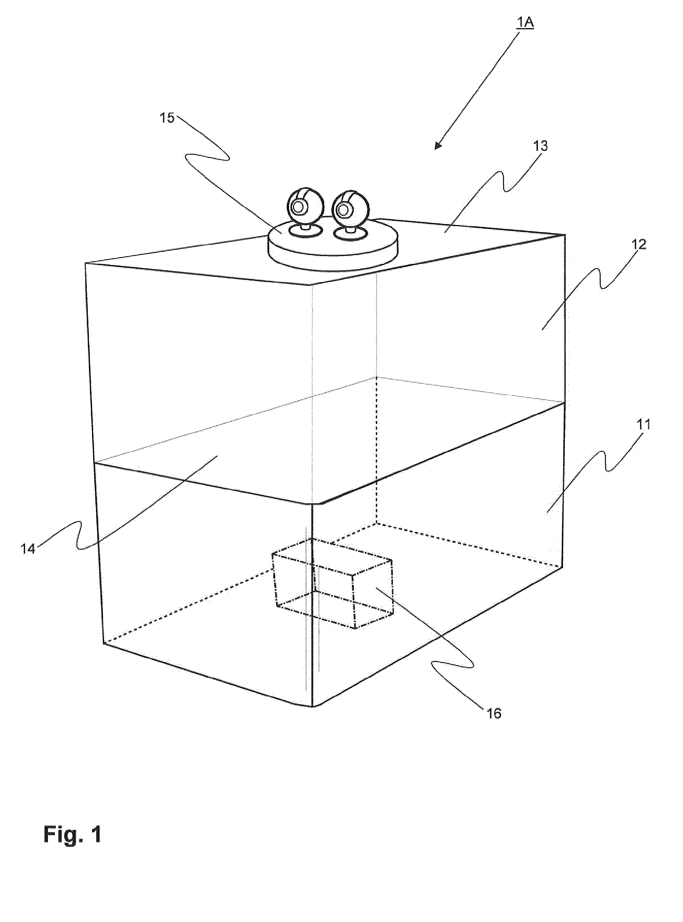

Figure 1 illustrates by way of example main parts that are essential for the operation of the virtual showcase 1A according to the first embodiment. The exemplary virtual showcase 1A in Figure 1 is a polyhedron, the base form of which is rectangular. However, the invention is not restricted to the embodiment shown in Figure 1A, but the virtual showcase may have, for example, an oval or round base solution.

The virtual showcase 1A according to the example in Figure 1 of a first embodiment of the invention advantageously comprises a closed, non-transparent base part 11, a advantageously translucent presentation part 12 above the base part, and a advantageously transparent planar surface 14 separating the base part 11 and presentation part 12. The reference number 13 refers to the roof of the presentation part 12, which is advantageously non-transparent.

The virtual showcase 1A according to the invention further comprises optical location finder means/machine vision means 15 for determining the distance and/or position of the viewer in the vicinity of the virtual showcase 1A. Cameras, of which there can be two or more, can advantageously be utilised as location finder means 15. In the example in Figure 1, the cameras acting as optical location finder means 15 have been placed on the roof 13 of the presentation part 12, but their location can naturally also be inside the presentation part 12, advantageously in its upper part, if it is made of partly transparent material.

If the optical location finder means 15 are placed to the base part 11 of the virtual showcase 1 in the example in Figure 1, each face of the virtual showcase 1A can advantageously have their own optical location finder means.

In the example in Figure 1, the presentation part 12 of the virtual showcase 1A is on top of the base part 11, and in this arrangement the image or images of the object under review are imaged by projecting them upwards from the device entity 16 of the base part 11 through the transparent planar surface 14 onto the inner surfaces of the different faces of the presentation part 12 of the virtual showcase, on which the individual images have been arranged to be focused. Because the faces of the presentation part 12 are advantageously translucent, the images projected onto these can be seen from outside the virtual showcase as images of the object on the outer surfaces of the different faces of the presentation part 12 of the virtual showcase.

In an advantageous embodiment of the invention, the images of the object projected onto two adjacent faces of the virtual showcase have been configured to be taken in an angle of 90 degrees in relation to each other.

In another advantageous embodiment of the invention the images of the object projected onto the sides of the virtual showcase are identical.

It is obvious for one skilled in the art that the base part 11 and the presentation part 12 of the virtual showcase 1A can change places so that the image or images of the object under review are projected downwards onto the presentation part 12, which is located lower.

In an advantageous embodiment of the invention one face of the virtual showcase can be omitted so that the viewer of the object can, when they so desire, to enter in the presentation part 12 of the virtual showcase 1A. In this embodiment the viewer has in a way the opportunity to enter inside the object under review, and they can then be shown how the parts, components or devices inside the object under review look like.

In Figure 1 there is illustrated a device entity 16 comprising electronic, data technical and optical means. The device entity 16 advantageously comprises both electronic/data technical means for processing and recording the digital information available on the object and optical means for projecting the image information available on the object under review onto the different faces of the presentation part 12 of the virtual showcase 1A.

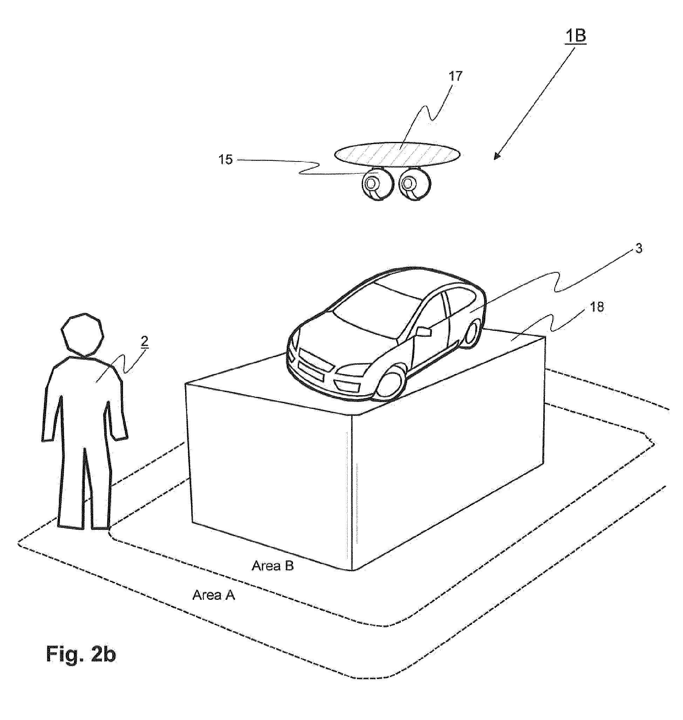

In another advantageous embodiment of the invention the image information is used for controlling the 3D display surface (Fig. 2B, reference 18), which is installed in place of the transparent planar surface in Fig. 1. The device entity 16 also includes data technical means, which is used for processing the place and position data of the viewer of the virtual showcase from the information obtained from the machine vision means 15.

The electronic/data technical means of the device entity 16 controlling the operation of the virtual showcase 1A comprises a processor or processor means comprising an arithmetic logic unit, a number of different registers and control circuits. A data recording arrangement, such as memory unit or memory means, is connected to the processor means, into which data or programs readable with a computer can be recorded. The memory means typically contains memory units, which allow both read and write functions (Random Access Memory, RAM) and memory units containing non-volatile memory, from which data can only be read (Read Only Memory, ROM).

The electronic/data technical means of the device entity 16 also comprises an input or input means for receiving data either from the location finder means 15 or some other external data processing device, which can be used for choosing or changing the object shown in the virtual showcase 1. Data received by the input means is transferred to be processed by the processor means of the device entity 16. By means of the received data, the processor means edits the image information of object into the form, which is suitable to be shown to the viewer 2 within a defined distance by using the optical imaging or projection means included in the device entity 16.

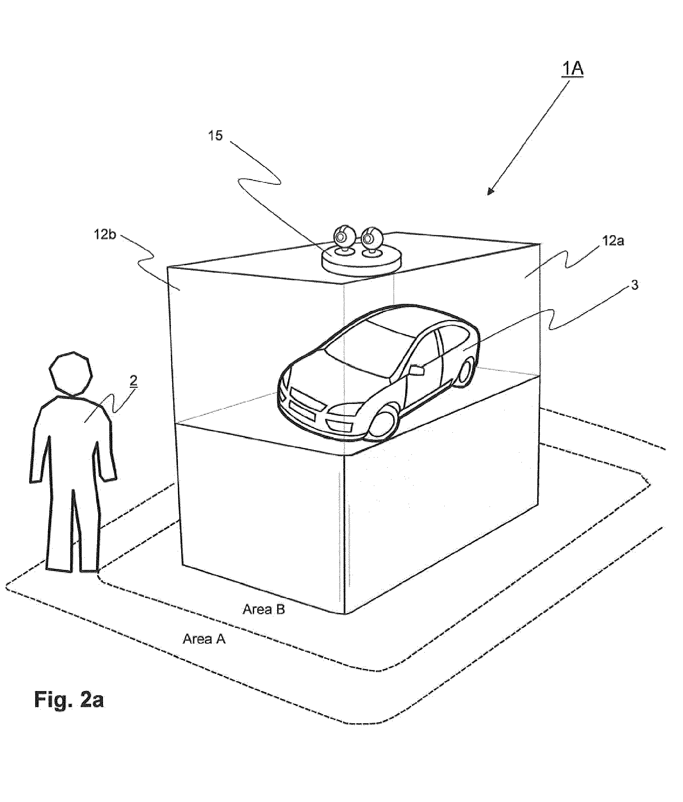

**Figure 2a** illustrates an example of the viewer 2 reviewing the vehicle3 in the virtual showcase 1A according to the first embodiment of the invention. In Figure 2a the viewer does not need any technical appliances for viewing the object 3 of the virtual showcase 1 from different sides.

In the example in Figure 2a images have been taken of the vehicle 3 from the front, both sides and back. In the example in Figure 2a an image of the driver's side of the car 3 has been projected onto the face 12a of the virtual showcase 1 A. The image from the direction of the nose of the car 3 has been projected onto the face 12b of the virtual showcase 1A. Figure 2a does not illustrate images taken of the car 3 on the two other faces of the virtual showcase 1A staying hidden in the direction of presentation in Figure 2a. These two faces of the virtual showcase 1A contain images of the traveller's side of the car 3 and the rear of the car 3.

The images of the car 3 onto the different faces of the virtual showcase 1A have been configured to be imaged by projection so that as the viewer 2 moves from the side of the face 12a depicting the driver's side to the side of the face 12b depicting the front of the car 3, the viewer is provided with the impression that he or she is circling the existing car 3 from the driver's side to the nose of the car. Such a display arrangement adapting to the place of the viewer 2 is made possible by the observation of the viewer's 2 place and position with machine vision means 15. On the basis of the viewer's 2 location information obtained from the cameras included in the machine vision means 15, images of the object 3 are projected onto different faces 12a and 12b of the virtual showcase 1 using the device arrangement 16.

The area surrounding the virtual showcase 1A of the invention is advantageously divided into two or more viewing areas. In the example in Figure 2a there are two nested viewing areas; area A and area B. The image information on the object under review shown on the faces of the virtual showcase 1A depends on to which viewing area the viewer 2 has been located. In the example in Figure 2a the viewer 2 is on the viewing area A, which is the outermost one of the viewing areas. In the case of the example in Figure 2a, the person on the viewing area A is shown the external appearance of the car 3 with the virtual showcase. On this viewing area A, the external appearance, colour and accessories of the car 3 can advantageously be modified with external electronic control means (not shown in Figure 2).

As the viewer 2 steps to the viewing area B, the interior of the car seen from the doors on the driver's side is advantageously shown on the face 12a of the virtual showcase 1A in the example in Figure 2a. Respectively, the engine compartment of the car with the bonnet open is advantageously shown on the face 12b of the virtual showcase 1A.

There may be more viewing areas than the two exemplary ones A and B shown in Figure 2a. By increasing the number of viewing areas it is possible to present details of the object under review on several different levels of accuracy.

In an advantageous embodiment of the invention, stereoscopic display is utilised in the virtual showcase 1A. In this embodiment the viewer 2 has the use of viewing means, which shows two images of different positioning of the same object 3 to the left and right eye of the viewer 2 on the faces of the virtual showcase 1 A. The positioning of the images differs as much as the real image of the object 3 perceived by the left and right eye would differ from each other. With this arrangement it is possible to generate 3D image of the object with a perceivable impression of depth.

One possible way to produce a stereoscopic view of the object 3 to the viewer 2 is to use radio-synchronized spectacles. Spectacles of this type are used for alternately darkening the field of vision of the viewer's left and right eye. When the darkening frequency of the field of vision is big enough, the viewer 2 is generated an impression of the 3D object in the virtual showcase 1.

**Figure 2b** illustrates an example of the viewer 2 viewing the vehicle 3 in the virtual showcase 1 B according to a second embodiment of the invention. In Figure 2b the viewer does not need any technical appliances for viewing the different sides of the object 3 in the virtual showcase 1 B. This advantageous embodiment does not have a fixed presentation part and its roof. The place and position of the viewer 2 of the object is monitored by cameras 15, which can be attached for example to the roof 17 of the presentation room either directly or with separate connection means.

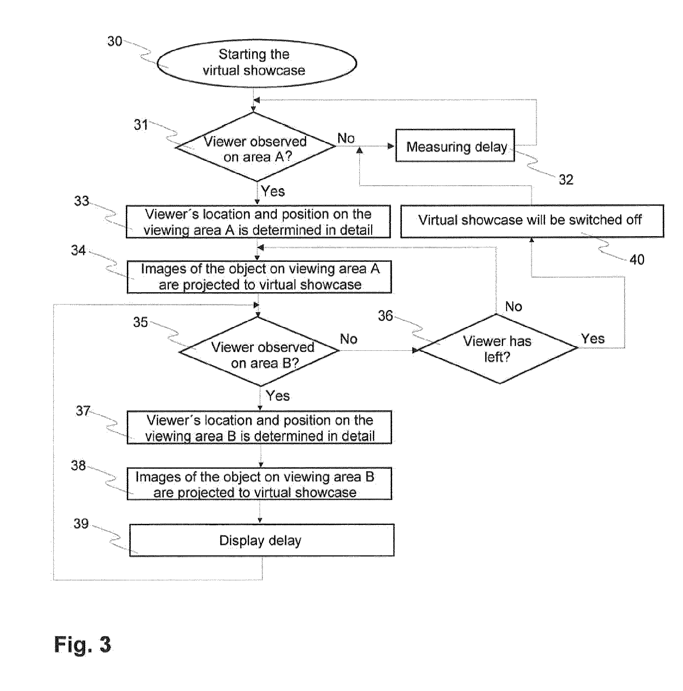

In the example in Figure 2b, 3D image of the vehicle 3 is rendered above the display surface 18. As the viewer 2 moves from the driver's side to the front of the car 3, they are generated the impression that they are encircling an existing car 3 from the driver's side to the side of the nose of the car. This is made possible by observing the viewer's place and position with the machine vision means 15.

Also the area surrounding the virtual showcase 1 B according to the second embodiment of the invention is advantageously divided into two or more viewing areas. In the example in Figure 2b there are two nested viewing areas; area A and area B. The image information to be shown on the object 3 under review in the virtual showcase 1 B depends on to which viewing area the viewer 2 has been located. In the example in Figure 2b the viewer 2 is on the viewing area A, which is the outer one of the viewing areas. In the case of the example in Figure 2b the person on the viewing area A is shown the external appearance of the car 3 by using the virtual showcase.

As the viewer 2 steps to the viewing area B, in the example in Figure 2b the interior of the car seen from the doors on the driver's side is advantageously imaged on the 3D display surface 18 of the virtual showcase 1 B.

Also in this advantageous embodiment there can be more viewing areas than the two exemplary viewing areas A and B shown in Figure 2b. By increasing the number of viewing areas details of the object under review can be presented on several different levels of accuracy.

A stereoscopic 3D image can be executed, for example, by rendering an image of the object 3 advantageously at least twice both to the left and the right eye. It is possible to generate 3D image by using, for example, several interposed translucent plasma/LCD/LED/OLED display panels, which are configured to direct the light of each subpixel of the object 3 in an optimal angle to the viewer's eyes on the basis of the definition of the viewer's place and eye position. By proceeding in this way the viewer is generated an appropriate perspective view of the object 3 under review at a certain view angle. In this case the viewer is given an impression of a three-dimensional object 3 above the display surface 18 of the virtual showcase 1 B. In this kind of arrangement the viewer does not need separate glasses to observe the three-dimensionality of the object 3.

In an advantageous embodiment of the invention a stereoscopic display is utilised in the virtual showcase 1A or 1 B. In this embodiment the viewer 2 has the use of viewing means, which shows two images of different positioning of the same object 3 to the left and right eye of the viewer 2 on the faces of the virtual showcase 1. The positioning of the images differs as much as the real image of the object 3 perceived by the left and right eye would differ from each other. With this arrangement it is possible to generate 3D image of the object with a perceivable impression of depth.

**Figure 3** illustrates an exemplary flowchart of the main steps of the presentation method of the images to be presented of the object 3 in the virtual showcase 1A according to Figure 2a of the invention.

In step 30, the virtual showcase 1A of the invention is activated by starting the machine vision means 15 and the device entity 16 used for controlling the virtual showcase. The default display status of the object is presented in the activated virtual showcase 1A. Alternatively, instructions either for changing the object for another one or for having to make alterations to the default display are given to the virtual showcase with an external data processing device. After the activation, the virtual showcase of the invention is ready to function.

In the checking step 31 the data technical means of the device arrangement 16 of the virtual showcase 1A is used for making a decision on whether the viewer 2 observed with the optical location finder means 15 is on the outermost viewing area A of the virtual showcase 1A. If the result of the check is "No", the virtual showcase 1A will carry out a repeat check after a delay 32. The duration of the delay 32 can be determined case-by-case.

If the result of the check in step 31 is "Yes", the next step will be 33, in which the viewer's location on the viewing area A is determined in detail. In this connection advantageously also the position of the viewer 2 is determined.

In step 34 images of the object 3 are projected onto at least two such adjacent faces of the virtual showcase 1A that the viewer 2 can perceive from their current position using the optical imaging means of the device arrangement of the virtual showcase 1A. The content and details of the images depicting the object 3 projected onto the faces of the virtual showcase 1A are determined on the basis of the presentation parameters specified for the viewing area A.

In the checking step 35 a decision is made of if the viewer 2 has moved from the viewing area A to the viewing area B. If the result of the checking step 35 is the option "No", the viewer 2 has not moved from the viewing area A to the viewing area B.

After this it will still be determined in step 36 if the viewer 2 is still on the viewing area A. If the result of the checking step 36 is "No", the viewer 2 is still on the viewing area A. In this case, the control process of the virtual showcase 1A returns to step 34. The images of the object 3 on the different faces of the virtual showcase 1A will then remain unchanged.

If the result of the checking step 36 is "Yes", the display of the virtual showcase 1A will be switched off in step 40.

The measuring delay 32 will follow the step 40, after which it is checked if there is a viewer on the viewing area A or not. After this the control process of the virtual showcase 1A will continue in the manner described above.

If the result of the checking step 35 is "Yes", the viewer 2 has moved to the viewing area B closer to the virtual showcase 1 A. The location of the viewer 2 on the viewing area B will then be determined accurately in step 37. In the same connection, also the position of the viewer's 2 body and/or eyes will advantageously be determined.

In step 38, the optical projection means of the virtual showcase 1A is used for projecting images of the object 3 onto at least two such adjacent faces of the virtual showcase 1A which the viewer 2 can perceive from their current location on the viewing area B. The content and details of the images depicting the object, projected onto the faces of the virtual showcase 1A are defined on the basis of the presentation parameter specified for the viewing area B. Advantageously more accurate details of the object 3 will be shown with the presentation parameters of the viewing area B than what was shown with the presentation parameters of the viewing area A.

The step 38 is followed by the display delay 39, the length of which can be determined case-by-case. After the display delay 39, the control process of the virtual showcase 1A returns to step 35, in which it is checked whether the viewer 2 is still on the viewing area B or not.

The control process of the virtual showcase 1A of the present invention has been depicted by using two exemplary viewing areas A and B. It is obvious for one skilled in the art that there may one, two or more viewing areas. If there are more than two viewing areas, the step 39 in the flowchart in Figure 3 will be followed by steps corresponding to the steps 35-39, which are repeated consecutively for each utilised viewing area.

The method steps of a second advantageous embodiment of the invention correspond to the process steps described above, with the exception of step 33. In this embodiment 3D image of the object is rendered in step 33 on the 3D display surface 18 functioning as the cover for the base part of the virtual showcase 1 B.

All control and projection process steps described above in the flowchart of Figure 3 can be carried out with computer program commands, which are executed in a suitable universal or special processor. The computer program commands can be recorded into a computer-readable medium, such as data disk or memory, from which the processor of the virtual showcase can retrieve the mentioned computer program commands and execute them. References to computer readable medium may also contain, for example, special components, such as programmable USB Flash memories, logic networks (FPLA), customer-specific integrated circuits (ASIC) and signal processors (DSP).

Some advantageous embodiments of the virtual showcase according to the present invention have been illustrated above. The invention is not restricted to the depicted solutions, but the inventive idea can be applied in many ways within limits set by the patent claims.

## Claims

1. A virtual showcase (1A) for presenting an object (3) under review, the virtual showcase comprising
- a base part (11) of the virtual showcase;
- a three-dimensional presentation part (12), the wall elements (12a, 12b) of which are translucent;
- a light-impermeable roof (13) of the presentation part; and
- optical means for projecting an image of the object under review from the base part (11) onto the inner surface of the wall elements (12a, 12b) of the presentation part (12),
**characterized in that** the virtual showcase (1A) further comprises
- means (15) for determining the location of a viewer (2) of the object under review in relation to the virtual showcase;
- means (15) for determining a position of the viewer (2) of the object in relation to the virtual showcase; and
- means (16) for projecting the image/images of the object (3) under review to the inner surface of the wall elements (12a, 12b) of the virtual showcase (1A) at least on the basis of the definition of the viewer's (2) location.

2. The virtual showcase according to claim 1, **characterized in that** the presentation part (12) of the virtual showcase (1A) is a polyhedron, four vertical faces of which form the wall elements for the presentation part, the angles between the faces being 90 degrees.

3. The virtual showcase according to claim 2, **characterized in that** images of the same object (3) from different viewing angles on the basis of the viewer's (2) location are projected to the adjacent faces (12a, 12b) of the virtual showcase (1A).

4. The virtual showcase according to claim 3, **characterized in that** the two images to be projected to the adjacent faces (12a, 12b) of the virtual showcase (1A) have been taken of the object (3) in 90-degree angles in relation to each other.

5. The virtual showcase according to claim 4, **characterized in that** the images (3) on the faces (12a, 12b) of the virtual showcase (1A) have been configured scalable on the basis of a defined viewing area (A, B) of the viewer (2).

6. The virtual showcase according to claim 5, **characterized in that** there are at least two defined encircling viewing areas (A, B) defined around the virtual showcase (1A).

7. The virtual showcase according to claim 6, **characterized in that** for the viewer (2) defined for the viewing area (B) closest to the virtual showcase (1A) the images (3) of the object have been configured to be projected and scaled on the basis of the viewer's (2) viewing angle.

8. The virtual showcase according to claim 7, **characterized in that** the viewer's (2) viewing angle has been configured to be defined with machine vision means (15) from the viewer's (2) eyes.

9. The virtual showcase according to claim 1, **characterized in that** the images on the faces (12a, 12b) of the virtual showcase (1A) are stereoscopic, the images being configured to present the object (3) under review as three-dimensional.

10. The virtual showcase according to claim 9, **characterized in that** the stereoscopic images of the object under review have been configured to be perceived as three-dimensional when viewed with radio-synchronized glasses.

11. The virtual showcase according to claim 10, **characterized in that** the virtual showcase (1 B) comprises the display surface (18), by means of which 3D image of the object (3) under review is configured above it for stereoscopic imaging.
